# EUROPEAN PATENT SPECIFICATION

(11) **EP 3 772 234 B1**
(45) Date of publication and mention of the grant of the patent: **10.01.2024**
(21) Application number: 19189871.7
(22) Date of filing: 02.08.2019
(51) Int. Cl.: H05B 6/12, H05B 6/64, F24C 7/08

(54) **COOKING DEVICE**
KOCHVORRICHTUNG
DISPOSITIF DE CUISSON

(43) Date of publication of application: 03.02.2021
(73) Proprietor: ELECTROLUX APPLIANCES AKTIEBOLAG, 105 45 Stockholm (SE)
(72) Inventor: KLEIN, Gerhard, 91541 Rothenburg ob der Tauber (DE); WUNDLING, Holger, 91541 Rothenburg ob der Tauber (DE); HOFFMANN, Harald, 91541 Rothenburg ob der Tauber (DE); MURGA, Hugo, 111 21 Stockholm (SE); DI NARDO, Alessandro, 10048 Vinovo (IT); KRAUßE, Constantin, 91541 Rothenburg ob der Tauber (DE); LUCKHARDT, Christoph, 91541 Rothenburg ob der Tauber (DE)
(74) Representative: Electrolux Group Patents

(56) References cited:
- EP-A2- 1 341 158
- WO-A1-2017/062883
- DE-A1-102017 111 356
- DE-A1-102018 120 740
- JP-A- S5 930 138
- US-A1- 2016 076 777

## Description

The present invention relates to a cooking device and a cooking system.

In operating cooking devices, such as ovens, hobs, cooking plates and the like, often the situation arises that it is difficult for the user to make necessary changes in settings of the device, because the user at the same time is manipulating cooking utensils, such as pots and pans, or because the user due to a preceding cooking operation has wetted hands and thus is unable to operate touchscreen elements for operation of the cooking device.

JP S59-30138 A discloses a heating device provided with a voice recognition device. A sensor for detecting a human body in front of the heating device stops the operation of the voice recognition device when there is no person in front of the heating device. A ready display indicates that the voice recognition device can be heard.

EP 1 341 158 A2 discloses a cooktop in which a wireless transmission and receiving unit is provided that communicates via a wireless transmission link with an extractor hood arranged above the cooking field. A voice control unit is provided with a microphone spatially arranged behind an optical sensor. The sensor is embodied as a motion sensor and responds to moving infrared sources. When the sensor detects such a moving infrared source, that is to say a human, it switches on the microphone.

DE 10 2017 111 356 A1 discloses a method of controlling a cooktop. The method comprises a step of reading a presence signal representing a touching of an activating surface of the cooktop and/or a further activating surface in the region of the cooktop or a gesture carried out by a user in the region of the activating surface and/or the further activating surface, wherein the activating surface is allocated to a cooking zone of the cooktop. The method comprises a step of receiving an acoustic signal representing an acoustic noise of the user in response to reading the presence signal and a step of setting a cooking function of the cooking zone allocated to the touched activating surface using the acoustic signal. Touching the activating surface of the cooktop can take place by placing a cooking vessel on the cooktop. In an embodiment, displacement of the cooking vessel on the cooktop also activates the speech input. In an embodiment, the method comprises a feedback step, in which a feedback signal that is configured optically to display the cooking function set or to be set, or to output it acoustically, is generated in response to the acoustic signal. If the method additionally comprises a confirmation step, in which a confirmation signal is read in response to the feedback step, the setting step may only be executed using the confirmation signal. The confirmation signal represents an additional touching of the cooktop, for example at the activating surface or another confirmation button.

US 2016/0076777 A1 discloses an oven range appliance. The operation of the oven range appliance is controlled by a processing device such as a controller. The controller may be configured to detect as inputs voice commands of a user of the oven appliance, e.g. to initiate or cancel operations of the oven appliance. In an exemplary method for operating the oven range appliance, the controller detects an input to start a self-clean cycle of the oven appliance. The self-clean cycle may be a voice command issued by a user of the appliance. The oven range appliance prompts the user to confirm that a self-clean cycle should be started. The oven appliance may prompt for confirmation of the self-clean cycle by any audible and/or visual prompt that indicates to the user that a confirmation is needed to start the self-clean cycle. For example, the prompt may be a notification displayed on a control panel of the appliance. The confirmation command may be a unique phrase that authenticates the user. The unique phrase may be any phase chosen by the user and programmed into e.g. the controller, and multiple users may each have a unique programmed phrase.

It is an object of the present invention to provide for a cooking device that allows for additional options for control of cooking functions, so as to facilitate the handling of the cooking device.

In accordance with the present invention the above object is solved by a cooking device as defined in claim 1. The cooking device, especially a hob or a cooking appliance with a door and a cavity, in particular an oven, a microwave or an induction hob, is provided with at least one cooking region, a control unit configured to be coupled with a communication interface for receiving voice signals as control commands from a user, wherein the control unit is configured for controlling a power supply to the at least one cooking region, wherein the control unit is configured to accept commands from the communication interface only upon recognition of the presence of the user. At the cooking appliance with a door and a cavity, especially an oven or a microwave, the cooking region is the cavity or a part of the cavity. The cooking region of a hob is preferably a variable assignment of one or more induction coils. This means that the cooking region can be a cooking zone, a part of a cooking zone or more than one coupled cooking zones.

According to the present invention, the cooking regions of the cooking device are adjusted by the user's voice commands. The communication interface is integrated in the cooking device and receives the voice signals from the user. The received voice signals are defined as voice signals coming from the user. That means that the communication interface can also receive voice signals from the user that have been converted into digital signals by another device. The term "controlling at least one cooking region" as used herein, preferably means that the cooking region may be adjusted by the user, particular in response to his voice commands.

In other words, the cooking device comprises at least one cooking region, means for determining that a user is present, a communication interface for receiving voice signals, and a control unit coupled to the at least one cooking region and the communication interface, the means for determining that a user is present and communication interface, wherein the control unit is configured for controlling the power supply to the at least one cooking region based on the detection of the presence of a user and the preceding or subsequent receipt of voice signals by the communication interface.

The cooking device of the present invention allows for voice control of a cooking region, wherein in order to avoid that the cooking region inadvertently is operated without direct user interaction, such as on receipt of incidentally received sound signals that were not given by a user but originate for example from a broadcasted signal or from ambient sounds. The cooking device is equipped with means, for example a proximity sensor, for determining that a user is present, and wherein the control unit of the cooking device provides for changes of device settings on receipt of voice signals only upon confirmation that a user actually is present.

While the cooking device can be configured to check for the presence of a user either continuously or at predetermined time intervals, so as to be able to immediately react on a subsequently received voice signal, the cooking device alternatively or additionally can be configured to check for the presence of a user upon receipt of a voice signal. Alternatively or additionally the cooking device can be configured to accept a voice input for a predetermined time interval upon determining that a user is present.

Before executing a voice command, the cooking device of the present invention ascertains that the user is present, i.e. that there is a line-of-sight connection between the user and the cooking device, so as to avoid an operation of the cooking device that may provide for undesired or even hazardous results. The cooking device of the present invention thus enables a safe hands-free operation of the cooking device without the risk of the cooking device changing settings while in fact no user is present.

The control of the power supply of the at least one cooking region that is performed by the control unit involves any change in operating conditions of the at least one cooking region, such as switching on or off a cooking region, changing the power level of a cooking region, changing the size and/or shape of a variable cooking region, combining several cooking regions into a combined cooking region, splitting a cooking region into several smaller cooking regions, setting timer functions, setting the device into a child-safe mode in which changes in devices settings are blocked until the child-safe mode is terminated or interrupted, etc.

Preferred embodiments of the present invention are defined in the dependent claims.

In particular, the control unit can be configured to accept voice signals from the communication interface only within a predetermined time interval between the detection of the presence of a user and the receipt of the said voice signals, such as within a predetermined time interval of between 1 s and 60 s, between 5 s and 40 s, or between 10 s and 30 s. Providing for a predetermined time interval adds to the safety in that it further reduces the chance that a received voice signal does not originate from the user of the cooking system.

In embodiments of the cooking device the control unit can be configured to accept voice signals from the communication interface only upon recognition of a code, such as a code word, by the communication interface. In such embodiments the acceptance of voice commands by the control unit from the communication interface has to be triggered by the user by saying a code word, for example "hob" or "cooker" or "chef". This preferably means that the communication interface of the cooking device is activated with a voice signal, especially a code word. Using code, such as a code word, to start voice operation of a cooking device is of particular advantage when there are several devices that can be controlled by voice commands, such as a hob, an oven, a microwave and a range, wherein by the use of codes it can be differentiated which device is to be operated.

According to an embodiment of the invention, the cooking device preferably responses to the user after its activation with a signal, especially a sound, a light and/or a digital signal.

Preferably, the cooking device comprises a memory for storing one or more codes, which either can be codes, such as code words, that are predefined by the manufacturer and which can be changed such as in the course of a servicing or update operation, or which can be selectively determined by a user.

In accordance with the invention, the means for determining that a user is present comprises a display provided at the cooking device, and control means configured to prompt a user to voice a randomized password that is shown at a display of the cooking device and to compare the displayed password with the signal received from the communication interface. That means that the presence of the user is therefore controlled by the control unit that is configured to prompt a user to voice a randomized password that is shown at the display of the cooking device and to compare the displayed password with the signal received from the communication interface. The randomized password that is shown in the display of the cooking device is preferably a word, a sign, a picture, a symbol and/or characters or a combination of these, and the user has to reproduce said randomized password with a voice signal.

In other words, in accordance with the present invention, the control unit is configured to access a list of passwords, and to select one of said list of passwords at a time, particularly in a randomized manner from said list of passwords and display said password on a display of the cooking device to a user.

Thereby, the control unit preferably displays said password for a predetermined time period only. The time period is between 5 s and 60 s, preferably between 10 s and 40 s, most preferred between 20 s and 30 s. The control unit is further configured to compare a signal, received from the communication interface, with said password and, if the received signal is representative and/or can be assigned to said displayed selected password of the list of passwords, a respective command to change the cooking region or a function of the cooking device is executed. In other words, if the received voice command comprises the selected and displayed password, the command is executed. If the received signal is not representative and/or can not be assigned to said displayed selected password of the list of passwords, a respective command to change the cooking region or a function of the cooking device is not executed. Preferably, the control unit is displaying that the command will not be executed and/or transfers a respective signal to the voice control device, which may output to the user acoustically that the command is not executed and/or the code could not be verified. In other words, if the received voice command comprises the selected and displayed password, the command is executed. And, if the received voice command does not comprise the selected and displayed password, the command is not executed.

Subsequently, in a further such round of voice recognition, a further password is selected from the list of passwords, which is preferably different from the password selected in the one or predetermined number of previous rounds of passwords. This advantageously increases the probability that an unintentional use of the password or a misuse is prevented.

Preferably the control unit thus secures that the password of the first round is not used for a number of rounds and/or a predetermined time frame, until it can be reused.

Such list of passwords is preferably stored in the cooking device, e.g. on the control unit and/or a memory connected to the control unit, or alternatively in external memory, particularly in a cloud storage and/or a server memory. In an embodiment the list of passwords is adjustable by a user. Alternatively, the list of passwords is predefined by the manufacturer and may or may not be changed or adapted by the user.

Particularly, the list of passwords could be adjusted and/or trained by the user. Additionally or alternatively the manufacturer may provide a list of passwords which are unlikely to be used in a standard home environment, particularly in connection with the code, which is used to activate the communication interface.

Particularly the list of passwords may comprise forenames or surnames of cooks, real or non-real persons.

In order to provide for a convenient means for the user to determine a code, the memory can be connected to the communication interface and can be configured to store one or more codes, such as code words, that are recorded by a user.

In embodiments the cooking device comprises said at least one cooking region and said control unit.

While the present invention can be employed with any kind of cooking device, it can be used with particular advantage in a hob, particularly in a hob having a plurality of cooking zones which in preferred embodiments can be varied in size and/or shape and which preferably can be combined with at least one adjacent cooking zone, so as to provide for a further variability in the size and shape of the cooking zones. While in such devices often several cooking zones are used simultaneously, wherein further cooking parameters, such as the power level of individual cooking zones are frequently changed, the ability to adapt the cooking parameters by voice command is particularly helpful because the user needs not interrupt his activities, such as manipulating pots and pans, stirring, manually preparing or handling ingredients etc.

In accordance with the present invention a cooking system is also claimed. The cooking system comprises said cooking device and a voice recognition device configured for communication with the control unit via the communication interface. The cooking device, i.e. can comprise an external voice recognition device that is configured for communication with the control unit via the communication interface.

In such embodiments, the external voice recognition device can be a mobile phone which communicates with the cooking device, such as via a WLAN coupling. While thus the cooking system can take advantage of the audio system of the mobile phone which is employed as voice recognition device, the cooking system also may use further resources of the mobile phone. Thus, for example the voice recognition process can be performed at least in part by the mobile phone, and/or the display of the mobile phone can be used to provide prompts or instructions to the user.

In further preferred embodiments, the external voice recognition device can be part of, or communicate with a smart home system which may be used to control various home devices, such as other kitchen appliances, lighting devices, home entertainment devices and the like.

Such smart home systems thus either may be controlled by a local server which is configured to control devices of an individual home, or may be run by a cloud based server that is used in connection with plural home systems, such as Google HomeO, Amazon Echo^{®}, Apple Homepod^{®} or the like, wherein speech assistant programs may be implemented, such as Amazon AlexaO or Apple SiriO, which provide for speech recognition.

In embodiments the communication interface can comprise a microphone that is provided at the cooking device, such as in a frame, housing or hood of the cooking device, in which case also the voice signal processing, i.e. the voice recognition and the generation of respective control signals based on the recognized voice signal, preferably is effected at the cooking device, such as by a signal processing circuit that is part a controller of the device or which is provided as a separate unit that communicates with the controller.

In such embodiments the cooking device thus provides for means for ascertaining a line-of-sight connection between the user and the cooking device by providing for a display at the cooking device which displays randomized changing password, which has to be voiced by the user so as to activate the communication interface of the cooking device.

To provide for an alternative manner of ascertaining a line-of-sight connection between the user, not in accordance with the invention, the means for determining that a user is present may comprise a light barrier provided at the cooking device, and control means configured to prompt a user to interrupt the light barrier and to check whether an interruption of the light barrier can be detected within a predetermined time interval. That means that the presence of the user is controlled by the control unit that is configured to prompt a user to interrupt a light barrier provided at the cooking device and to check whether an interruption of the light barrier can be detected within a predetermined time interval.

For example, the light barrier may comprise a transmitter and a receiver, for example an infrared emitter and receiver pair, one element of which is provided at the top of a cooking panel and the other is provided above the cooking panel, for example at the bottom of a range hood. For a use to activate the voice control of the cooking panel, the light barrier can be interrupted by the user waving with a hand or a cooking utensil between transmitter and receiver.

In such alternatives, the means for determining that a user is present provides for a gesture recognition, the security level of which can be increased by prompting the user to perform more complex gestures, such as plural passes of the light barrier, or passes of varying duration, such as a short interruption followed by a longer interruption. Furthermore, there may be provided more than one light barrier, so that also the direction of the gesture to be performed by the user can be detected.

The means for determining that a user is present further can comprise various sensing devices, and thus can comprise a proximity sensor, a motion sensor, a touch sensitive element, such as a sensor for measuring conductivity of the user's hand or skin at a surface element of the hob or at the cookware item, or any combination of such elements.

Further to determining that a user is present by detecting the body of a user, such as by a proximity sensor or a motion sensor, the presence of a user can be detected by detecting changes in cookware which is present in a cooking region. That is, the cooking device can comprise cookware detection means for detecting the placement of cookware in at least one cooking region, and the control unit can be configured for controlling the power supply to the at least one cooking region based on the detection of a change in the placement of cookware in the at least one cooking region and the subsequent or preceding receipt of voice signals by the communication interface.

While the cooking device can be configured to check for the presence of a user continuously or at predetermined time intervals, so as to be able to immediately react on a subsequently received voice signal, in such latter embodiments acceptance of voice signals can be triggered by the placement or movement of cookware onto or within a cooking region.

Such latter embodiments particularly are suited for implementation in an induction hob, in which pot detection easily can be provided for by evaluating the inductive coupling between a cookware item and an induction coil of a cooking region in which the cookware item is placed. In an induction hob with cookware detection, the present invention thus makes use of the cookware detection to identify a newly placed pot or pan and thus ascertain that on the one hand a user is present and that on the other hand the correct cooking region is specified for appliance of voice signals that are receive by the voice input means. Thus, upon a cookware item having been recognized by the cookware detection means, a timed input interval can be triggered in which a user can provide for voice input signals, wherein also the cooking region to which the voice input signals are applied is determined by the cookware detection means.

In such latter embodiments the cooking device can comprise at least two cooking regions, wherein the control unit is configured to apply the voice signals received by the communication interface to the cooking region for which a change in the placement of cookware has been detected last. Thus, if it is detected that cookware is shifted from one cooking region to another cooking region, a voice signal that is received by the communication interface is applied to the cooking region to which the cookware has been shifted.

In further embodiments, the cookware detection means can be configured for detecting a change in placement of cookware in the at least one cooking region, such as sliding, shifting, lifting, jarring, shaking, and the like. Thus, if more than one cookware items are simultaneously heated, a voice command such as a spoken power level can be assigned to a cooking zone by providing for a movement of the cookware item that is located in such cooking zone.

The above described embodiments of the present invention that use a cookware detection means can be easily implemented when the cooking region comprises an induction coil, in which case the cookware detection means can be implemented by means for measuring the capacitance of the induction coil.

In such latter embodiments the present invention provides for an advantageous combination of cookware detection means as often present in modern induction hobs, with voice control user philosophy.

In particular, in accordance with the present invention the cookware detection means can be used to detect a piece of cookware being placed on a certain coking region, such as a cooking zone, an induction coil, or a cooking area, or is moved within such coking region. Upon detection of the presence of a cookware item, the hob may allow for a certain time interval voice control to adjust a parameter to be applied with the respective cooking region, such as the power level. The acceptance of voice signals is limited for a predetermined time interval so as to secure that the user is present at the hob. While such predetermined time interval serves to ascertain a timely relationship of the detection of the presence of a user and the receipt of voice commands, the sequence of user presence detection and voice command receipt of also can be reversed, i.e. upon receipt of a voice command, the hob checks whether within a certain time interval the presence of a user can be detected, and if so applies the voice command for the respective cooking region.

In preferred embodiments, the pot detection means may detect a movement of a cookware item, e.g. a sliding, lifting, jarring, shaking, such as it may be applied to a pan during a frying procedure. Also in such embodiments the hob control allows to adjust or set cooking zone specific parameters, such as cooking level, time, etc., for a limited time interval. This allows the device control to assign the recognized voice command to the correct cooking zone, i.e. the cooking zone where the movement has been detected last.

The cooking device of the present invention thus not only restricts the application of voice signals to situations in which a user is present so as to ascertain device safety. Further, in the present cooking device which particularly may comprise a hob having several cooking regions the voice input signals are reliably applied to the cooking region in which movement of the respective cookware item is detected. Thus, also in situations in which plural cookware items are heated simultaneously, the voice input signals can be reliably assigned to the correct cooking region.

Whereas in embodiments in which the presence of a user is detected by a detection of movement of cookware, which at the same time allows to assign a received voice command to a cooking region, i.e. to the cooking region in which the movement was detected, in embodiments in which the presence of a user is detected in a different manner, for example by means of a proximity sensor, in certain situations specifying a cooking region in which to apply a voice command can be omitted.

That is, while in a cooking device having more than one cooking region, the control unit will be configured to assign voice commands for changing parameters to a particular cooking region on receipt of a respective voice command that designates the respective cooking region, such as when the user says "front left 7", "rear right 3", "front center off" etc., the cooking device can be configured to apply voice commands to a particular cooking region also without specifying the cooking region in case that only one cooking region is in operation. Thus, if for example in a hob having more than one cooking region one of the cooking regions is operating at power level 3 and the user wants to raise the power level to 5, the hob can be configured to accept the simple voice command "5" to change the power level of the active cooking region. Similarly, if in a hob having more than one cooking regions a first cooking region is operating at power level 3 and a second cooking region is operating at power level 5, and the user wants to raise the power level of the first cooking region to 6, the hob can be configured to accept a voice command such as "3 to 6" to correspondingly change the power level of the first cooking region.

Further to accepting power levels, the cooking system can be configured to accept voice commands for switching variable cooking zones, such as "front left large" or "combine left zones", for setting timer functions, such as "front left off in 15 minutes" or "front rear 1 in 10 minutes", etc.

Whereas generally the cooking system can be configured to only accept a set of predefined commands, preferably the cooking system is configured to accept various versions of the same command such as "front left 2", "set left front plate to 2", "2 in front left zone", "change left front zone to 2", etc.

## Claims

1. A cooking device with at least one cooking region comprising:
a control unit configured to be coupled with a communication interface for receiving voice signals as control commands from a user, wherein the control unit is configured for controlling a power supply to the at least one cooking region, wherein the control unit is configured to accept commands from the communication interface only upon recognition of the presence of the user,
wherein the control unit is configured to access a list of passwords, and to select one of said list of passwords at a time, and
wherein the control unit is configured to compare a signal, received from the communication interface, with said password, **characterized in that**
the control unit is configured to select the password from the list of passwords in a randomized manner and display said password on a display of the cooking device to a user and **in that**, if the received signal is representative and/or can be assigned to said displayed selected password of the list of passwords, a respective command to change the cooking region or a function of the cooking device is executed.

2. The cooking device of claim 1, wherein the control unit is configured to accept voice signals from the communication interface only within a predetermined time interval between the detection of the presence of a user and the receipt of the said voice signals.

3. The cooking device of claim 1 or 2, wherein the predetermined time interval is between 5 s and 60 s, preferably between 10 s and 40 s, most preferred between 20 s and 30 s.

4. The cooking device of any one of the preceding claims,
wherein the control unit is configured to accept voice signals from the communication interface only upon recognition of a code by the communication interface.

5. The cooking device of claim 4, comprising a memory for storing one or more codes.

6. The cooking device according to any one of the preceding claims, wherein the control unit is configured to display said password for a predetermined time period.

7. The cooking device of any one of the preceding claims,
wherein the cooking region is a variable assignment of one or more induction coils.

8. The cooking device of any one of the preceding claims, comprising means for determining that a user is present that further comprise a proximity sensor, a motion sensor and/or a touch sensitive element.

9. A cooking system with a cooking device according to any one of the preceding claims, comprising a voice recognition device configured for communication with the control unit via the communication interface.

10. The cooking system of claim 9, comprising an external voice recognition device.

11. The cooking system of claim 10, wherein the external voice recognition device is a mobile phone or a device that is part of or communicates with a smart home system or a remote control station.

12. The cooking system of claim 9, wherein the communication interface comprises a microphone that is provided at the cooking device.

## Patentansprüche

1. Kochvorrichtung mit mindestens einem Kochbereich, umfassend:
eine Steuereinheit, die dazu ausgelegt ist, mit einer Kommunikationsschnittstelle zum Empfangen von Sprachsignalen als Steuerbefehle von einem Benutzer gekoppelt zu sein, wobei die Steuereinheit dazu ausgelegt ist, eine Leistungszufuhr zu dem mindestens einen Kochbereich zu steuern,
wobei die Steuereinheit dazu ausgelegt ist, Befehle von der Kommunikationsschnittstelle nur bei Erkennung der Anwesenheit des Benutzers anzunehmen,
wobei die Steuereinheit dazu ausgelegt ist, auf eine Liste von Passwörtern zuzugreifen und eines aus der Liste von Passwörtern nach dem anderen auszuwählen, und
wobei die Steuereinheit dazu ausgelegt ist, ein von der Kommunikationsschnittstelle empfangenes Signal mit dem Passwort zu vergleichen, **dadurch gekennzeichnet, dass**
die Steuereinheit dazu ausgelegt ist, das Passwort aus der Liste von Passwörtern auf randomisierte Weise auszuwählen und das Passwort auf einer Anzeige der Kochvorrichtung einem Benutzer anzuzeigen
und dadurch, dass, wenn das empfangene Signal für das angezeigte ausgewählte Passwort aus der Liste von Passwörtern repräsentativ ist und/oder diesem zugewiesen werden kann, ein jeweiliger Befehl zum Ändern des Kochbereichs oder einer Funktion der Kochvorrichtung ausgeführt wird.

2. Kochvorrichtung nach Anspruch 1, wobei die Steuereinheit dazu ausgelegt ist, Sprachsignale von der Kommunikationsschnittstelle nur innerhalb eines vorbestimmten Zeitintervalls zwischen der Detektion der Anwesenheit eines Benutzers und dem Empfang der Sprachsignale anzunehmen.

3. Kochvorrichtung nach Anspruch 1 oder 2, wobei der vorbestimmte Zeitintervall zwischen 5 s und 60 s, vorzugsweise zwischen 10 s und 40 s, am stärksten bevorzugt zwischen 20 s und 30 s liegt.

4. Kochvorrichtung nach einem der vorhergehenden Ansprüche, wobei die Steuereinheit dazu ausgelegt ist, Sprachsignale von der Kommunikationsschnittstelle nur bei Erkennung eines Codes durch die Kommunikationsschnittstelle anzunehmen.

5. Kochvorrichtung nach Anspruch 4, umfassend einen Speicher zum Speichern eines oder mehrerer Codes.

6. Kochvorrichtung nach einem der vorhergehenden Ansprüche, wobei die Steuereinheit dazu ausgelegt ist, das Passwort für eine vorbestimmte Zeitdauer anzuzeigen.

7. Kochvorrichtung nach einem der vorhergehenden Ansprüche, wobei der Kochbereich eine variable Zuweisung einer oder mehrerer Induktionsspulen ist.

8. Kochvorrichtung nach einem der vorhergehenden Ansprüche, umfassend Mittel zum Bestimmen, dass ein Benutzer anwesend ist, die ferner einen Näherungssensor, einen Bewegungssensor und/oder ein berührungsempfindliches Element umfassen.

9. Kochsystem mit einer Kochvorrichtung nach einem der vorhergehenden Ansprüche, umfassend eine Spracherkennungsvorrichtung, die zur Kommunikation mit der Steuereinheit über die Kommunikationsschnittstelle ausgelegt ist.

10. Kochsystem nach Anspruch 9, umfassend eine externe Spracherkennungsvorrichtung.

11. Kochsystem nach Anspruch 10, wobei die externe Spracherkennungsvorrichtung ein Mobiltelefon oder eine Vorrichtung ist, die Teil eines Smarthome-Systems oder einer Fernsteuerungsstation ist oder damit kommuniziert.

12. Kochsystem nach Anspruch 9, wobei die Kommunikationsschnittstelle ein Mikrofon umfasst, das an der Kochvorrichtung bereitgestellt ist.

## Revendications

1. Dispositif de cuisson avec au moins une région de cuisson comprenant :
une unité de commande configurée pour être couplée avec une interface de communication pour recevoir des signaux vocaux sous forme d'instructions de commande d'un utilisateur, dans lequel l'unité de commande est configurée pour commander une alimentation électrique vers l'au moins une région de cuisson,
dans lequel l'unité de commande est configurée pour accepter des instructions provenant de l'interface de communication uniquement lors de la reconnaissance de la présence de l'utilisateur,
dans lequel l'unité de commande est configurée pour accéder à une liste de mots de passe, et pour sélectionner l'un de ladite liste de mots de passe à un moment, et
dans lequel l'unité de commande est configurée pour comparer un signal, reçu en provenance de l'interface de communication, avec ledit mot de passe, **caractérisé en ce que**
l'unité de commande est configurée pour sélectionner le mot de passe dans la liste de mots de passe de manière aléatoire et afficher ledit mot de passe sur un écran du dispositif de cuisson à un utilisateur et **en ce que**, si le signal reçu est représentatif et/ou peut être attribué audit mot de passe sélectionné affiché de la liste de mots de passe, une commande respective pour changer la région de cuisson ou une fonction du dispositif de cuisson est exécutée.

2. Dispositif de cuisson selon la revendication 1, dans lequel l'unité de commande est configurée pour accepter des signaux vocaux provenant de l'interface de communication uniquement pendant un intervalle de temps prédéterminé entre la détection de la présence d'un utilisateur et la réception desdits signaux vocaux.

3. Dispositif de cuisson selon la revendication 1 ou 2, dans lequel l'intervalle de temps prédéterminé est compris entre 5 s et 60 s, de préférence entre 10 s et 40 s, plus préférablement entre 20 s et 30 s.

4. Dispositif de cuisson selon l'une quelconque des revendications précédentes, dans lequel l'unité de commande est configurée pour accepter des signaux vocaux provenant de l'interface de communication uniquement lors de la reconnaissance d'un code par l'interface de communication.

5. Dispositif de cuisson selon la revendication 4, comprenant une mémoire pour stocker un ou plusieurs codes.

6. Dispositif de cuisson selon l'une quelconque des revendications précédentes, dans lequel l'unité de commande est configurée pour afficher ledit mot de passe pendant une période de temps prédéterminée.

7. Dispositif de cuisson selon l'une quelconque des revendications précédentes, dans lequel la région de cuisson est une attribution variable d'une ou plusieurs bobines d'induction.

8. Dispositif de cuisson selon l'une quelconque des revendications précédentes, comprenant des moyens pour déterminer qu'un utilisateur est présent qui comprennent en outre un capteur de proximité, un capteur de mouvement et/ou un élément tactile.

9. Système de cuisson avec un dispositif de cuisson selon l'une quelconque des revendications précédentes, comprenant un dispositif de reconnaissance vocale configuré pour une communication avec l'unité de commande par l'intermédiaire de l'interface de communication.

10. Système de cuisson selon la revendication 9, comprenant un dispositif de reconnaissance vocale externe.

11. Système de cuisson selon la revendication 10, dans lequel le dispositif de reconnaissance vocale externe est un téléphone mobile ou un dispositif qui fait partie de ou communique avec un système domestique intelligent ou une station de commande à distance.

12. Système de cuisson selon la revendication 9, dans lequel l'interface de communication comprend un microphone qui est fourni au niveau du dispositif de cuisson.
